# EUROPEAN PATENT APPLICATION

(11) **EP 1 482 714 A1**
(43) Date of publication of application: **01.12.2004**
(21) Application number: 04253188.9
(22) Date of filing: 28.05.2004
(51) Int. Cl.: H04L 29/12, H04L 12/24

(54) **System and method of network address translation in system/network management environment**

(30) Priority: 29.05.2003 US 449582
(71) Applicant: Sun Microsystems, Inc., Santa Clara, California 95054 (US)
(72) Inventor: Rangarajan, Govindarajan, Sunnyvale, CA 94087 (US); Rai, Nagendra K., Fremont, CA 94536 (US); Krivopaltsev, Eugene, San José, CA 95129 (US)
(74) Representative: Meldrum, David James

(57) **Abstract**

In a computer network system, a mechanism is described for enabling system/network management system to operate in a network address translation environment. Embodiments of the invention allow users to define and specify logical identifiers for agents connecting to the system management network and wishing to communicate with a server layer in the network. The logical identifiers enable the server layer to resolve the addresses of connecting agents to the IP addresses stored and recognized by the server layer.

## Description

### FIELD OF THE INVENTION

The present claimed invention relates generally to the field of computer network systems. More particularly, embodiments of the present claimed inrention relate to address translation in a system/network management environment.

### BACKGROUND ART

Information Technology organizations face difficult challenges in managing the availability of applications and computing resources within the enterprise. The growth of networks and distributed systems has led to an increasingly complex heterogeneous environment, encompassing a broad spectrum of hardware, software and operating systems.

Today, systems range from PCs and technical workstations on user's desktops, to small and mid-size servers in departments, all the way up to large enterprise servers and mainframes in the corporate data-center. Computing resources may be geographically dispersed across a business campus or around the world to support global business operations. The proliferation of LANs and WANs means that users can access corporate information assets almost anywhere, any time of day or night.

In recent trends in distributed corporate computing, the use of mission-critical applications has blossomed, helping companies to become more competitive and conduct business more effectively. The mission-critical nature of these applications, however, is aggravating an already difficult system management task. Users are demanding systems and applications that are continuously accessible and available with expectations for improved levels of service that are constantly on the rise.

As the demands for acceptable service levels and the complexity of the computing environment have increased, administrators have responded by standardizing procedures and adopting network-aware tools. While limited in functionality, many of these tools have helped address the need for remote network management. Still other tools allow administrators to monitor individual systems and hardware components.

To meet the rising demands for better levels of service, it is crucial both to manage and monitor the availability of applications and data, as well as the availability of individual systems and networks. However, administrators still lack an integrated way of doing so. While the job of managing systems, applications and data is becoming increasingly complex, IT managers must still control costs and provide non-interrupting services to their clients on a 24/7 basis. This calls for the system administrator to not only monitor and manage the availability of systems, but also to ensure that when a system goes down, the recovery time is kept to a minimum.

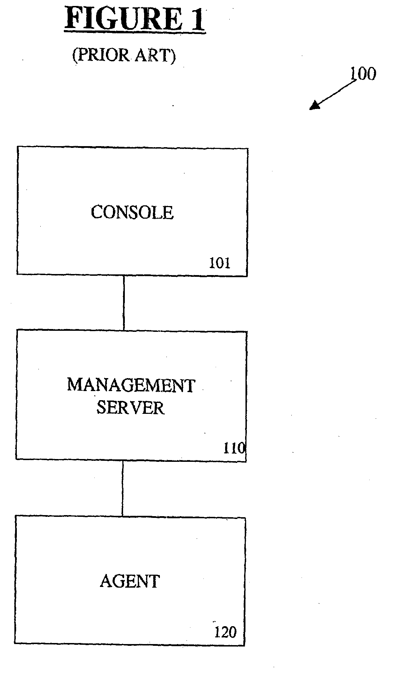

Figure 1 is a depiction of conventional network management system 100. The system illustrated in Figure 1 comprises three layer components of a console layer 101, a server layer 110 and an agent layer 120.

The console layer 101 comprises multiple consoles serving multiple users for the network management system 100. The consoles provide visual representations of managed objects (for example, hosts and networks) to users of the network management system 100. The consoles also provide users with the ability to manipulate attributes and properties associated with the managed objects and the ability to initiate management tasks (for example, dynamic reconfiguration of a host or a device).

The server layer 110 accepts requests from users through the console layer 101 and passes these requests to the appropriate agents. The server 110 then relays the response from the agent back to the user. For example, if a user wants information on the number of users accessing a agent, the server 110 receives this request from any one of consoles in the console layer 101, and sends the request to that particular agent. The host finds the requested information and passes it back to the server which then transmits the information to the user via the console layer 101. The server 110 also provides the console with a secure entry point to interface with the agents in the agent layer 120.

The agents in the agent layer 120 perform the actual tasks of information gathering, monitoring and management of objects on the nodes managed by the network management system 100. The server 110 interacts with the agents to gain access to managed objects on the network. Each of these layers typically run on different machines in a network.

With the explosion of the Internet, Network Address Translation is becoming very important in customer environments. Network Address Translation (NAT) is also becoming increasingly prevalent in a system management environment as that described in Figure 1. By employing NAT, customers can make more efficient use of network addresses and, in some cases, provide secure access to sensitive internal environments from external networks. A NAT functions to map the private local address realm to a public address realm. These mappings may be static or dynamic in nature.

There are two types of NAT: dynamic and static. Dynamic NATs are typically for streaming communication that is initiated by only one party and whose endpoint addresses and ports are not scrutinized.

In a static NAT environment where all the appropriate mappings already exist, the system management tool can be made to operate properly, although it will be subject to certain complexities and constraints.

The use of NAT has significant ramifications in a system management environment, such as the Sun Microsystems™ system management product SunMC™, which makes assumption that an IP address and port of a managed node can be used to uniquely identify and communicate with the managed node by the management server. The system/network management system makes extensive use of IP addresses in both its core operation and its management functionality,

Specifically, network addresses are used in the following areas of the system/network management system: communication; network entity discovery; identification of managed nodes, managed property contents, etc. In an environment where the customer networks operate one or more NATs, the assumptions regarding the uniqueness and accessibility of the local IP addresses and ports of managed nodes break down. Furthermore, the use of local IP addresses to identify managed nodes in a NAT environment may no longer be intuitive since users may be more familiar with the node's public IP address.

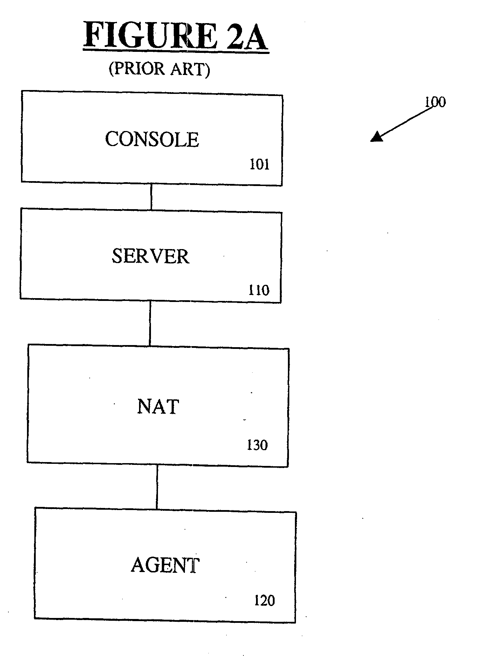

The breadth of use of IP addresses in the system management environment depicted in Figure 2A makes it very difficult to deploy solutions involving simple address or proxy translations levels. This is also further complicated by the types of communication that occur within the system/network management framework. Specifically, the system/network management framework in Figure 1 is a distributed application with a console layer, a server layer and an agent layer. These layers can not only reside on different hosts, but they can reside on different networks, and may be subject to routing rules or NAT 130.

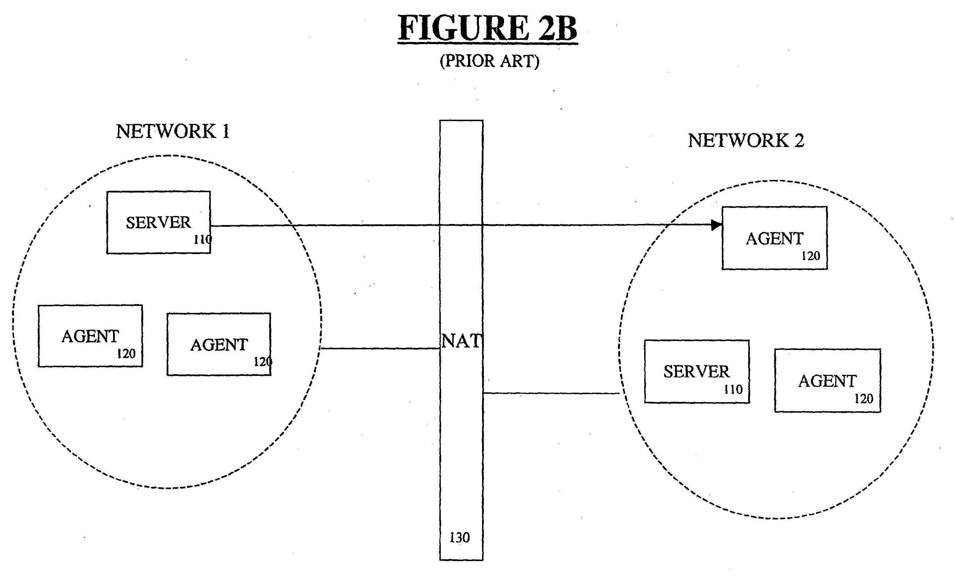

Furthermore, the console, server or agent components of one system management system could potentially communicate to components of another system/network management framework on another network. All of this contributes to the complexity of providing an address translation solution to the environment depicted in Figure 2B.

Because of these issues and the relative costs of the various solutions approaches of the prior art, a simple solution which is viable to implement with minimal expense and which provides minimal complexity and maximum usability to the end user is needed. A solution that provides a self consistency and avoids complex or error-prone translations mechanisms is also needed. A system/network management system address translation solution that provides backward compatibility with existing system/network management systems is also needed.

### SUMMARY OF INVENTION

Accordingly, there is provided a multi-host, network system comprising a system/network management software system having a network address translation system for translating host addresses in the network.

What is described herein is a computer system/network management system having a network address translation software for translating network address of host agents managed by management servers on the network. Embodiments of the present invention allow users to define and specify logical identifiers for host agents connecting to the underlying network and wishing to communicate with a server layer in the network. The logical identifiers enable the server layer to resolve the addresses of connecting host agents to the IP addresses stored and recognized by the server layer.

Embodiments of the present invention also include a logical identifiers generation unit that generates logical identifiers to uniquely identify the systems where the system management components are running. For example, the logical identifiers generated by an agent must be resolvable to a valid IP address on the system where the management server is running in order to enable any communication between the management server and the agent. The logical identifiers may be qualified host names of the agent.

Embodiments of the present invention also include an address mapping unit that provides guideline for mapping logical identifiers to valid IP address in the server.

Embodiments of the network system management address translation system of the present invention also include a configuration unit that provides a mechanism for configuring server side address. For example, the configuration unit configures logical identifiers presented by an agent in such a way that the logical identifiers of the agent must be in both the server's addressing realm and the agent's addressing realm. The configuration unit further allows the system management software to handle address management (translation) for multiple agents on the network.

Embodiments of the network system management address translation system of the present invention further include a host address mapping unit that adds logical identifiers to the agents or portions of the network to the host maps in all the relevant addressing realms where the system management components are operating.

Embodiments of the network system management address translation system of the present invention further include address translation unit that specifies the type of logical identifiers to IP address translation that may be processed in a particular network.

These and other objects and advantages of the present invention will no doubt become obvious to those of ordinary skill in the art after having read the following detailed description of the preferred embodiments which a re illustrated in the various drawing figures.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram of a prior art computer network system;
Figure 2A is a block diagram of a prior art computer network management system with a network address translator;
Figure 2B is a block diagram of a prior art computer network system in a multi-network environment;
Figure 3 is block diagram illustration of one embodiment of a network/system management address translation system environment in accordance with an embodiment of the present invention;
Figure 4 is a block diagram illustration of an embodiment of the internal architecture of the network/ system management address translation system of Figure 3;
Figure 5 is a block diagram illustration of one embodiment of an exemplary network address translation environment in accordance with a network service of an embodiment of the present invention;
Figure 6 is a block diagram of an embodiment of a server to agent communication in the address translation environment of one embodiment of the present invention;
Figure 7 is a block diagram of one embodiment of the network address translation environment having a single address translator of the present invention; and
Figure 8 is a block diagram of one embodiment of the network address translation environment having a dual address translators of the present invention.

### DESCRIPTION OF THE PREFERRED EMBODIMENTS

Reference will now be made in detail to preferred embodiments of the invention, examples of which are illustrated in the accompanying drawings. While the invention will be described in conjunction with the preferred embodiments, it will be understood that they are not intended to limit the invention to these embodiments.

On the contrary, the invention is intended to cover alternatives, modifications and equivalents, which may be included within the spirit and scope of the invention as defined by the appended Claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well-known methods, procedures, components, and circuits have not been described in detail as not to unnecessarily obscure aspects of the present invention.

The embodiments of the invention are directed to a system, an architecture, subsystem and method to process network addresses in a computer network system. In accordance with an aspect of the invention, a system for translating network host addresses of host agents in a system/network management framework.

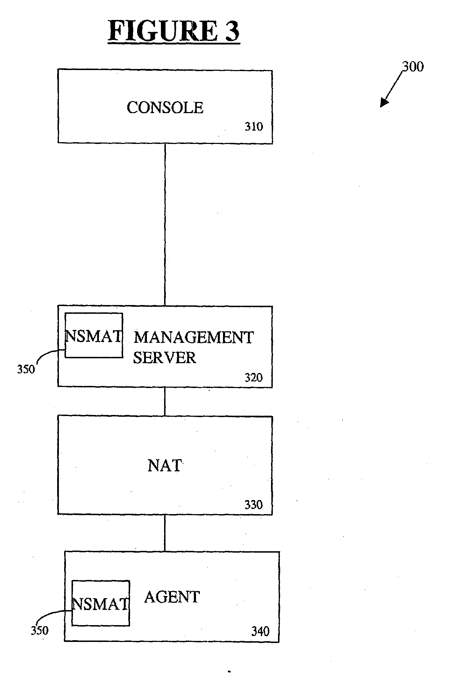

Figure 3 is a block diagram depiction of one example of a network management system 300. The network management system environment 300 illustrated in Figure 3 comprises a console layer 310, a management server layer 320, a network address translation layer 330, an agent layer 340. The management server layer 320 and the agent layer 340 respectively comprises a system/network management address translation system (NSMAT) 350 of the present invention.

The console layer 310 comprises multiple consoles serving multiple users for the network management system 300. The consoles provide graphical visual representations of managed objects (for example, hosts and networks) to users of the network management system 300. The consoles also provide users with the ability to manipulate attributes and properties associated with the managed objects and the ability to initiate management tasks (for example, dynamic reconfiguration of a host or a network) with graphics interface tools.

The management server layer 320 accepts requests from users through the consoles and passes these requests to the appropriate agents in the agent layer 330. The management server 320 provides a set of system management services. The management server 320 further provides a secure centralized point of access for all system management operations. All requests from the console layer 310 are funneled through the server.

The management server 320 recognizes duplicate requests intelligently consolidating them for a higher network and system efficiency. The management server 320 also enforces the security models, authenticating users and handling all user session management. The management server 320 receives all requests from clients. The management server 320 then relays the response from the agents 340 back to the user. For example, if a user wants information on the number of users accessing services over the network, the management server 320 receives this request from any one of consoles 310 in the console layer, and sends the request to that particular agent. The agent 340 finds the requested information and passes it back to the server 320 which then transmits the information to the user via the consoles. The server 320 provides the consoles with a secure entry point to interface with the agents.

The agent layer 340 represents managed objects in the network. The agents 340 provides basic services: networking, snmp protocol translations, authentication, etc. The agents 340 further provide a platform to plug management object modules. The agents 340 perform management tasks through use of management modules that are extensible and customizable. The agent layer 340 includes default modules that provided the infrastructure for the network services.

The agent layer 340 further comprises one embodiment of a network/system address translation system (NSMAT) 350 of the present invention that allows logical identifiers to be used in place of IP addresses to uniquely identify and access nodes managed by the system/network management software in a NAT environment. In NAT environments, these identifiers can be fully qualified host names of managed nodes, allowing the system management software to leverage off existing hostname to IP address mapping infrastructure in IP-based systems.

In one example in environments where the use of fully qualified hostnames are not appropriate or feasible, any logical name that is unique and resolvable from the agent and server layer addressing realm may be used. In one example, in non-NAT environments, the logical identifiers can default to IP addresses for backward compatibility with previous versions of the system management software.

In one example, the NSMAT 350 assumes that the logical identifiers of the present invention must be unique and that these logical identifiers can be resolved to valid IP addresses that can be used to access managed nodes in the network.

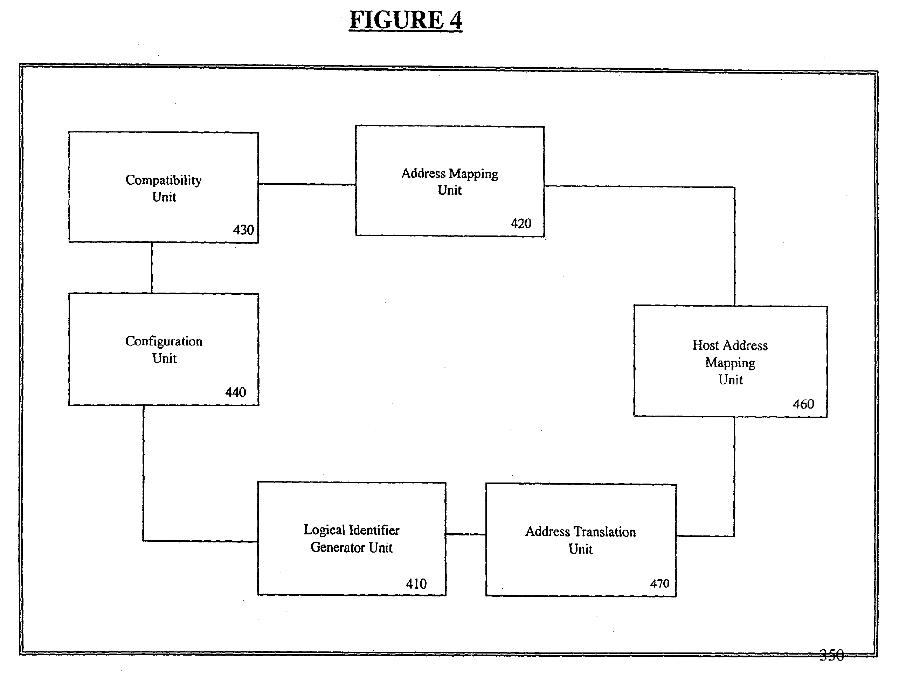

Figure 4 shows an example of the internal architecture of one embodiment of the NSMAT 350 of the present invention. As shown in Figure 4, the NSMAT 350 comprises logical identifiers generation unit 410, address mapping unit 420, compatibility unit 430, configuration unit 440, host address and mapping unit 460.

The logical identifiers generation unit 410 generates logical identifiers that are used in place of IP addresses to uniquely identify and access nodes managed by the system management software. In one example, the logical identifiers must be unique. The logical identifiers can be resolved to an IP address that can be used to access a managed node. In one example, users are able to use the logical identifiers to identify and view managed nodes intuitively.

In another example, by default, the logical identifiers can be the fully qualified host names of the managed nodes which allows the system management software 340 to leverage off the existing hostname to IP address mapping infrastructure found in all IP-based systems. In environments where fully qualified hostnames are not appropriate or feasible, any logical name that is unique and resolvable to valid IP addresses in an agent and a server layer address realm may be used.

The host address mapping unit 420 provides guidelines for mapping host logical identifiers to corresponding IP addresses on both the server and the agent. For example, the NATS 350 requires that logical identifiers of nodes managed by the system management environment agents be based on names (e.g., hostnames, fully qualified hostnames or logical names) that can be resolved to valid IP addresses in the agent, management server and console addressing realms.

The NSMAT 350 also requires that the server layer hostnames specified for an agent must be resolvable to a valid IP address in the agent, management server and console address realms. In one example if the system management software 340 is unable to resolve a logical name of an agent to a valid IP address, the system 340 reports this as an error stating that the logical name is not valid and effectively aborts the translation operation.

The compatibility unit 430 enables the NSMAT 350 to be configured in such a way that the system/network management framework would be compatible with previous versions of network agents.

The configuration unit 440 configures logical identifiers in such a way that changes to the logical identifiers of a managed node (agent) must be preformed in both the server and agent addressing realms. The configuration unit 440 further includes logical addressing mode configuration. In one example, the system management components support the ability to operate in one or two addressing modes that control the formats of the component's logical identifiers. In one example, the logical identifiers may be based on IP addresses or logical names (e.g., host names, logical name, etc.).

Still referring to Figure 4, the host address mapping unit 460 adds logical identifiers to the managed nodes (e.g., agents) to host maps ( i.e., files NIS or NIS+) in all relevant addressing realms where the system management software components are operating. If the information is not already present in the host map and not readily available via other name services (such as DNS) components communicating with the system management software will use logical identifiers to initiate communications with other nodes by resolving the name to an IP address. In one example, applications involved via console integration can use the logical identifiers directly to initiate communications with a managed node, as all network-based applications accept hostnames and IP addresses inter-changeably.

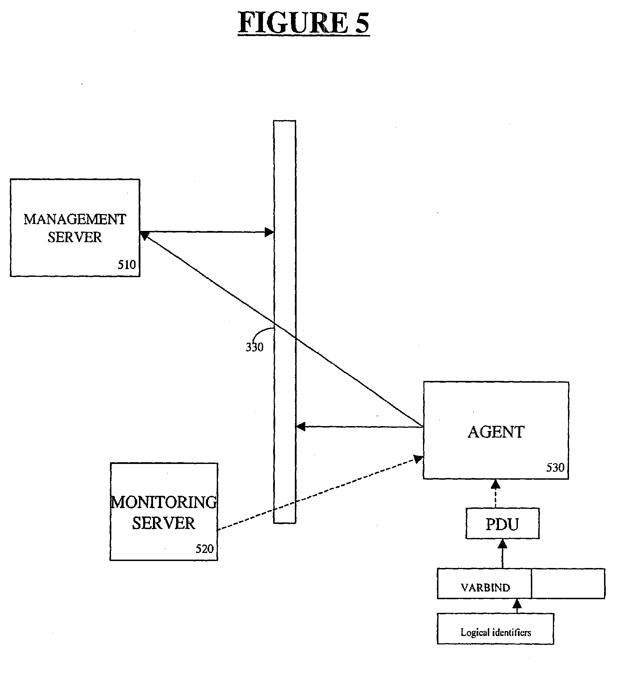

Figure 5 is a block diagram illustration of an example of an NSMAT 350 network environment. The network 500 in Figure 5 comprises a management server 510, monitoring server 520, and agent 530. In the example shown in Figure 5, agent 530 communicates with the management server 510 by providing the server 510 with its logical identification information, event and trap destination, etc., that are stored in the management server 510. The management server 510 therefore acts as the managing server for the agent 530. The information provided by agent 530 is used by the management_server 510 to map to a valid IP address in the management server 510 in order to identify the agent 530.

In one example, the management server 510 has a DNS entry that maps the logical identification information provided by the agent 530 to a valid IP address. The monitoring server 520 may be independently setup to monitor the agent 530.

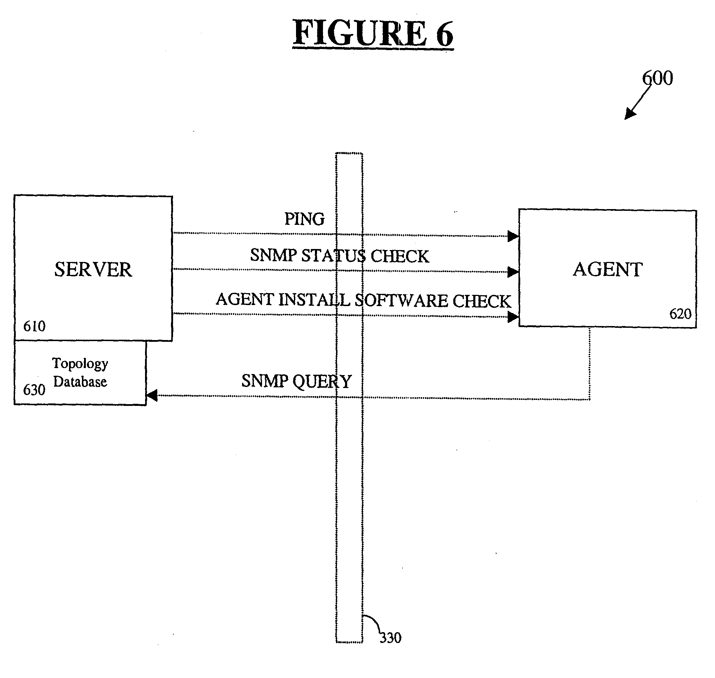

Figure 6 is a block diagram illustration of another example of an NSMAT 350 network environment. In the example shown in Figure 6, the management server 610 initiates communication with the agent 620 by issuing a "ping" command to the agent 620 to ensure that the agent 620 is active. The management server 610 subsequently transmits an SNMP status check command to determine whether the agent 620 is communicating with the underlying network protocol of the network 600.

After checking to ensure that the agent 620 is communicating on the underlying network protocol, the management server 610 checks to determine whether the agent software is running. The agent 620 then transmits its logical identification information to the management server 610 for storage in the database 630. In one example , the system/network management framework provides alternate way to discover the agent 620 on the network 600.

In one method of discovery, the management server 610 issues a discovery ("search") command that searches the network 600 to identify the agent 620. In another example, the agent 620 may be created with a specific logical identifier and an IP address. This information, once created, may be used to directly locate the agent 620 on the network 600.

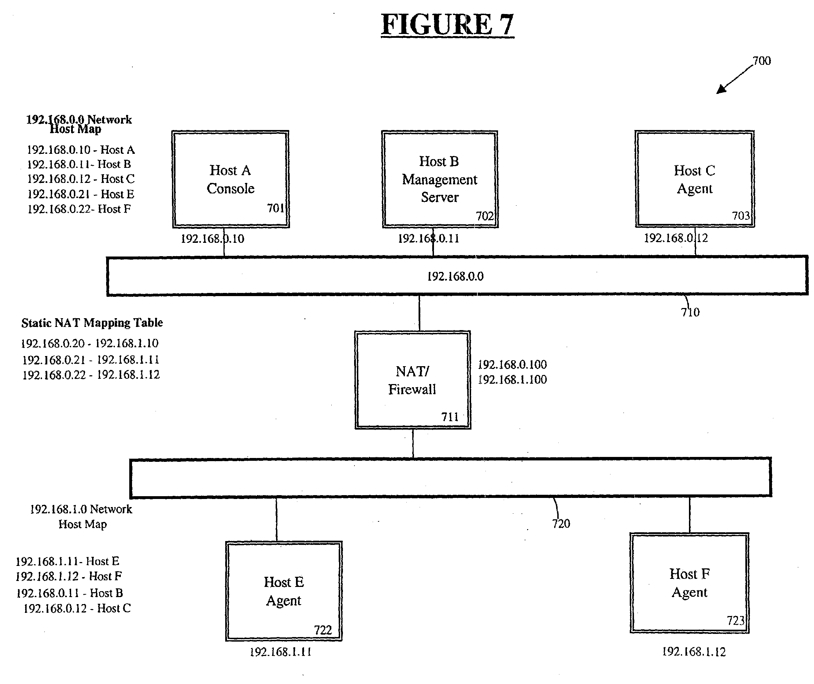

Figure 7 is block diagram illustration of an example of a network environment. As shown in Figure 7, the network environment 700 comprises host console 701, host management server 702, host agent 703, NAT/firewall 711, host console 721, host agent 722 and host agent 723. In the example network environment shown in Figure 7, the network supports multiple network agents ( e.g., 703, 721 - 723), management server 702 and consoles 701 & 721. In the example illustrated in Figure 7, the network environment 700 supports a system management server managing a set of agents located on both sides of the NAT/firewall units.

In one example, an agent boots up and loads all the modules that it requires. Once all the modules are loaded, the NSMAT 350 checks to see if the agent is configured in IP or name mode. If the agent is configured in name mode, it sends userConfig trap with its logical name in the varbind of the trap. If the agent is configured in IP mode, it sends its local IP address in the varbind of the trap. The server then retrieves either the IP address or logical name from the trap and if it is a logical name converts it to an IP address. It then stores the IP address as a location for the agent.

The host A console 701, host B server 702 and agent C 703 are deployed in the, example 192:168:0:0 network. Host D console 721 and host E agent 722 and host F agent 723 are deployed in the example 192:168:1:0 network. The address translation/firewall 711 is deployed between two networks. The management agents located on either side of the NAT/firewall are managed by the management server layer on host B 702.

In one example, the system management components are configured to operate in the logical name node. As such, all agents configured with host B 702 as their management server layer. The two remote agents 722 & 723 are made accessible from the example 192:168:0:0 network using a static addressing translation mapping. Furthermore, the logical identifiers of host E 722 and host F 723 must also be resolvable to valid IP addresses in the example 192:168:0:0 network. This is accomplished, in one example, through host mappings for host E 722 and host F 723 in the example 192:168:0:0 network. To allow the agents 722 & 723 to use management server 702, a host map entry for host B 702 is specified in the example 192:168:1:0 network host map.

Thus, in the example in Figure 7, console users on host A 701 can log into the management server on host B 702 to manage the agents on host C 703, host E 722 and host F 723. The agents are identified by their logical names. All management operations can also be based on the logical names.

Furthermore, in the example illustrated in Figure 7, each network addressing realm (i.e., the 192:168:0:0 and 192:168:1:0 networks) maintains their own host maps through their respective naming services or configuration files. This simplifies the host map configurations by centralizing the required host mappings and allowing all relevant hosts to be accessible from any host on each network. However, it should be noted that the resolution of the hosts on all nodes (as illustrated in configurations in Figure 7), is more than actually required for the system management environment to operate across in the network address translation environment. The actual host mappings required by the various hosts for the system/network management environment to operate in the basic network address translation environment may be as follows:
1. On the server host (host B), host mapping for the agents hosts (host C, E, F, & G) are specified.
2. On agent hosts ( hosts C, E, & F), the host mapping for the server host (Host B) are specified.
3. On the console host (host A ) the host mapping for the server host (host B) and the agent hosts (host C, E, &F) are required.

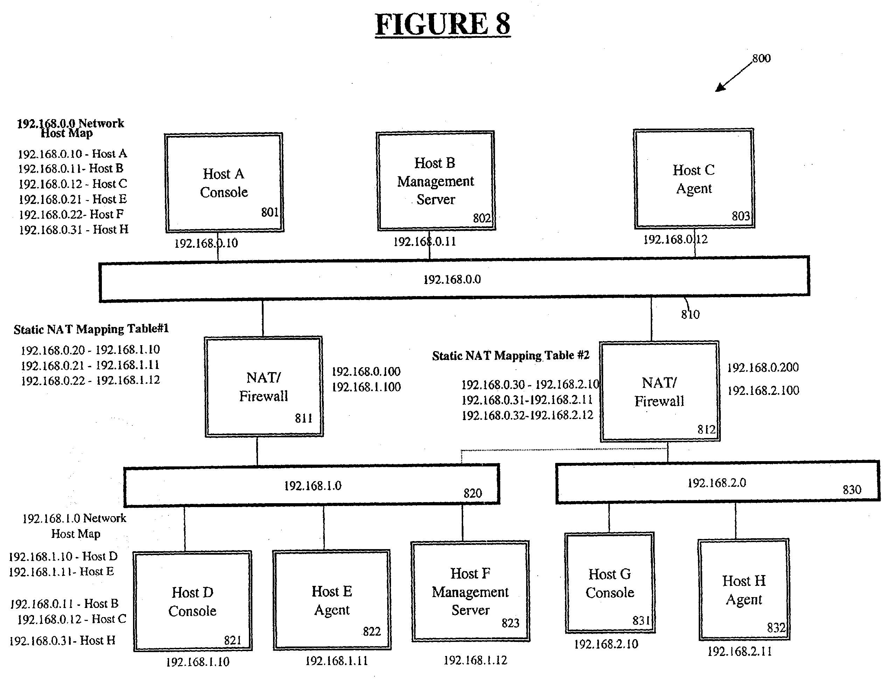

Figure 8 is a block diagram of another example of a network environment of the present invention. The network environment 800 illustrated in Figure 8 comprises a dual network address translation scheme with two management servers with reference domains, which refer to agents managed through another management server. As shown in Figure 8, the network environment 800 comprises host console 801, host server 802, host agent 803, networks 810, 820 and 830, NAT/ firewalls 811 and 812, host consoles 821 and 831, host agents 822 and 832 and host server 823. In the example network environment shown in Figure 8, the network supports dual address translation units 810, 820 and 830 between multiple network agents (e.g., 803, 822 - 832), servers 802 and 823, and consoles 801, 821 & 831. In the example illustrated in Figure 8, the network environment 800 supports multiple management servers that are deployed on both sides of the networks 810, 820 and 830.

In the example network environment 800, the 192.168.0.0 network is in-front of the NAT/firewalls (NAT) 811 and 812. The 192.168.1.0 and 192.168.2.0 networks are behind the NAT/firewall 811 & 812. The NAT/firewall 811 provides the 192.168.0.0 network with access to the hosts on the 192.168.1.0 network. The NAT/firewall 812 provides the 192.168.0.0 network with access to hosts in the 192.168.2.0 network.

In one example, Static NAT mappings are assumed. Host maps in the three addressing realms provide hostname resolution for all hosts on which the system management server and agent components are deployed. All the system management components are assumed to be configured with the logical name addressing mode. In one example, the following system management configurations is assumed:
a) agents on host agent 803 and host agent 822 are part of the set of managed objects managed by the management server on management server 802;
b) agents on host 832 is part of the set of managed objects managed by the management server on management server 823 ; and
c) The set of managed objects managed by management server 802 references a remote domain in the set of managed objects managed by management server 823 containing host agent 832.

The system management and network address translation illustrated in Figure 8 allows the following operations:
i) the system management console user on host 801 when connected to server 802 can manage agents on host agent 803 and 822. When logged into server 802, the user can also monitor agent 832 through a remote reference domain in server 823.
ii) the system management console user on host console 821 logged into server 823 can manage agent on host 832.

The foregoing descriptions of specific examples and embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications are suited to the particular use contemplated. It is intended that the scope of the invention be defined by the Claims appended hereto and their equivalents.

## Claims

1. A computer network system, comprising:
a server comprising a plurality of server network services hierarchically arranged as a plurality of managed objects, said server maintaining hierarchical and topology information of said managed objects;
a plurality of computer network agents;
a plurality of network consoles;
a network system management system for managing said plurality of agents, said server, said plurality of consoles and said plurality of managed objects; and
a network/system management addressing translation system for translating network addresses based on an internet protocol into logical identifiers to uniquely identify and access said plurality of server, said plurality of agents and said plurality of consoles.

2. The computer network system of Claim 1, wherein said network/system management address translation system comprises address compatibility unit for allowing address translations between different versions of said network system management system.

3. The computer network system of Claim 1 or 2, wherein said network/system management address translation system further comprises address configuration unit for handling changes of addresses in said plurality of servers.

4. The computer network system of Claim 1, 2 or 3, wherein said network/system management address translation system further comprises address mapping unit for providing a plurality of addressing guidelines for mapping host identifiers to corresponding internet protocol (IP) addresses on both said plurality of servers and said plurality of agents.

5. The computer system of any preceding claim, wherein said network/system management address translation system further comprises host address mapping unit for adding logical identifiers to host maps in nodes managed by said network system management system.

6. The computer network system of Claim 5, wherein said network/system management address translation system further comprises logical identifiers generation unit for generating logical identifiers for uniquely identifying said nodes managed by said network system management address translation system within a particular network.

7. The computer network system of any preceding claim, wherein said network management system address translation system internet protocol (IP) address translation unit for translating public and private IP addresses into logical identifiers between said plurality of servers and said plurality of agents.

8. The computer network system of Claim 7, wherein said logical identifiers are resolvable to valid IP addresses in said plurality of agents and said plurality of servers.

9. The computer network system of any preceding claim, wherein said management server references remote domains in a plurality of network environments to enable user access to said plurality of agents and said plurality of servers over a plurality of networks.

10. The computer network system of Claim 9, wherein said logical identifiers comprise unique host names of said plurality of agents.

11. The computer network system of Claim 10, wherein said logical identifiers comprise unique fully qualified hostnames of said plurality of agents.

12. The computer network system of Claim 11, wherein said logical identifiers are unique within each of said plurality of server contexts.

13. A computer network management system, comprising:
system management system components comprising a plurality of network services hierarchically arranged as a plurality of managed hosts;
a rule-based management information base for managing status information of said managed objects; and
a network/system address management system for managing address translations of said managed hosts across a plurality of networks coupled to said system management system.

14. The computer network management system of Claim 13, wherein said network/system address management system comprises address compatibility unit for allowing address translations between different versions of said network system management system.

15. The computer network management system of Claim 13 or 14, wherein said network/system address management system further comprises address configuration unit for handling changes of addresses in said plurality of managed hosts.

16. The computer network management system of Claim 13, 14 or 15, wherein said plurality of managed hosts comprise a plurality of servers.

17. The computer network management system of any of Claims 13 to 16, wherein said plurality of managed hosts comprise a plurality of agents.

18. The computer network management system of any of Claims 13 to 17, wherein said plurality of managed hosts comprise a plurality of user consoles.

19. The computer network management system of any of Claims 13 to 18, wherein said network/system address management system further comprises address mapping unit for providing a plurality of addressing guidelines for mapping host identifiers to corresponding internet protocol (IP) addresses on both said plurality of servers and said plurality of agents.

20. The computer network management system of any of Claims 13 to 19, wherein said network /system address management system further comprises host address mapping unit for adding logical identifiers to host maps in said managed hosts by said network system management system.

21. The computer network management system of any of Claims 13 to 20 wherein said network/system address management system further comprises logical identifiers generation unit for generating logical identifiers for uniquely identifying said managed hosts by said network /system address management system within a particular network.

22. The computer network management system of any of Claims 13 to 21 wherein said network system address management system internet protocol (IP) address translation unit for translating public and private IP addresses into logical identifiers between said plurality of servers and said plurality of agents.

23. The computer network management system of any of Claims 13 to 22, wherein said said plurality of management servers comprising parameter information of agents managed/monitored by said plurality of servers.

24. The computer network management system of any of Claims 20 to 23, wherein said logical identifiers are resolvable to valid IP addresses in said plurality of agents and said plurality of servers.

25. The computer network management system of any of Claims 13 to 24, wherein said management servers each reference remote domains in a plurality of network environments to enable user access to said plurality of agents and said plurality of server over a plurality of networks.

26. The computer network management system of any of Claims 20 to 25, wherein said logical identifiers comprise unique host names of said plurality of agents.

27. The computer network management system of any of Claims 20 to 26, wherein said logical identifiers comprise unique fully qualified hostnames of said plurality of agents.

28. The computer network system of any of Claims 20 to 27, wherein said logical identifiers are resolvable to valid IP addresses in said plurality of agents and said plurality of servers.

29. In a system management network environment having a plurality of server hosts and a plurality of agent hosts, a system management address translation system for translating address access requests between said plurality of servers and said plurality of agents, said system management address translation system, comprising:
an address translation unit for logically mapping unique address identifiers to resolvable public and private internet protocol (IP) addresses between said plurality of servers and said plurality of agents;
address configuration unit; and
address compatibility unit.

30. The system management address translation system of Claim 29, further comprising address mapping unit for providing a plurality of addressing guidelines for mapping host identifiers to corresponding internet protocol (IP) addresses on both said plurality of servers and said plurality of agents.

31. The system management address translation system of Claim 29 or 30, further comprising host address mapping unit for adding logical identifiers to host maps in said managed hosts by said network/system address management system.

32. The system management address translation system of Claim 31, further comprising logical identifiers generation unit for generating logical identifiers for uniquely identifying said managed hosts by said system management system within a particular network.

33. The system management address translation system of Claim 31 or 32, further comprises internet protocol (IP) address translation unit for translating public and private IP addresses into logical identifiers between said plurality of servers and said plurality of agents.

34. The system management address translation system of any of Claims 30 to 33, wherein each of said plurality of servers comprise server context information comprising parameter information of agents connecting to said plurality of servers.

35. The system management address translation system of any of Claims 31 to 34, wherein said logical identifiers are resolvable to valid IP addresses in said plurality of agents and said plurality of servers.

36. The system management address translation system of any of Claims 30 to 37, wherein said management server references remote domains in a plurality of network environments to enable user access to said plurality of agents and said plurality of server over a plurality of networks.

37. A method of identifying network agents in a managed computer network system, said method comprising:
defining a unique logical identifier for an agent;
said agent generating a trap request to register with a management server in said computer network system;
receiving said trap request by said management server;
translating said unique logical identifier into a resolvable internet protocol (IP) address for said agent; and
generating a corresponding management information about agent that is stored by said management server.
